# EUROPÄISCHE PATENTSCHRIFT

(11) **EP 4 230 479 B1**
(45) Veröffentlichungstag und Bekanntmachung des Hinweises auf die Patenterteilung: **13.05.2026**
(21) Anmeldenummer: 23155375.1
(22) Anmeldetag: 07.02.2023
(51) Int. Cl.: B60R 11/04, B60R 1/28, G03B 17/56, H04N 23/50

(54) **INDIREKTES SICHTSYSTEM**
INDIRECT VISION SYSTEM
SYSTÈME DE VISION INDIRECT

(30) Priorität: 17.02.2022 DE 102022103783
(43) Veröffentlichungstag der Anmeldung: 23.08.2023
(73) Patentinhaber: MEKRA Lang GmbH & Co. KG, 91465 Ergersheim (DE)
(72) Erfinder: LANG, Werner Dr., 91465 Ergersheim (DE); POPP, Markus, 91484 Sugenheim (DE); SCHUH, Martin, 91617 Oberdachstetten (DE); PFEIFFER, Martin, 97258 Ippesheim (DE); POPP, Albrecht, 91629 Weihenzell (DE)
(74) Vertreter: Winter, Brandl - Partnerschaft mbB

(56) Entgegenhaltungen:
- CN-A- 108 312 979
- DE-A1- 102008 010 805
- DE-U1- 202015 101 259
- JP-A- 2002 341 432
- KR-A- 20120 066 293
- US-A1- 2020 156 559
- US-B1- 8 400 560

## Beschreibung

Die Erfindung betrifft ein indirektes Sichtsystem für ein Kraftfahrzeug, mit einer Bildaufnahmeeinheit, insbesondere einer Kamera, mit der ein Sichtbereich um das Kraftfahrzeug einsehbar ist und die mit einer Wiedergabeeinheit verbindbar ist, um das eingesehene Sichtfeld auf der Wiedergabeeinheit darzustellen, und einer Bildaufnahmeeinheit-Halterung zum Anbringen der Bildaufnahmeeinheit an dem Kraftfahrzeug, wobei die Bildaufnahmeeinheit-Halterung eine mit der Bildaufnahmeeinheit fest verbundene Trägerplatte, einen direkt oder indirekt mit dem Kraftfahrzeug fest verbindbaren Halter sowie eine die Trägerplatte und den Halter verbindende Tragstruktur aufweist, wobei die Trägerplatte und die Tragstruktur zueinander um eine erste Achse, beispielsweise innerhalb eines begrenzten ersten Winkelbereichs, drehbar verbunden sind und die Tragstruktur und der Halter zueinander um eine zweite Achse, beispielsweise innerhalb eines begrenzten zweiten Winkelbereichs, wobei die zweite Achse vorzugsweise unterschiedlich zu der ersten Achse ist, drehbar verbunden sind, so dass ein erster Winkel zwischen der Trägerplatte und der Tragstruktur um die erste Achse und ein zweiter Winkel zwischen der Tragstruktur und dem Halter um die zweite Achse mechanisch einstellbar ist.

Solche Kamerasysteme können bisherige Spiegelsysteme für Kraftfahrzeuge, insbesondere für einen Hauptspiegel und/oder einen Weitwinkelspiegel im Lastkraftwagenbereich, ersetzen. Dabei gibt es Vorgaben, welche Sichtfelder eingesehen werden müssen, so dass das Kamerasystem präzise ausgerichtet sein muss, um den gewünschten Sichtbereich richtlinienkonform einsehen zu können. Zudem ist es wünschenswert, dass zu beiden Seiten (linke/rechte Seite bzw. Fahrer-/Beifahrerseite) des Kraftfahrzeugs jeweils der gleiche Sichtbereich einsehbar ist.

Zur Verstellung solcher Kamerasysteme wird oftmals eine digitale Verstellung/Kalibrierung eingesetzt, da diese gegenüber einer mechanischen Verstellung kostengünstiger ist. Zum Beispiel offenbart die DE 10 2010 004 165 B4 ein Verfahren zum Kalibrieren eines Sichtsystems eines Fahrzeugs, wobei das Verfahren die Schritte umfasst, dass ein Muster in die Nähe des Fahrzeugs projiziert wird und das Sichtsystem unter Verwendung eines Bildes des Musters kalibriert wird, wobei das Bild von dem Sichtsystem erzeugt wird, wobei der Schritt des Projizierens des Musters den Schritt umfasst, dass das Muster in einem Infrarotspektrum projiziert wird und wobei das Sichtsystem eine erste Kamera und eine zweite Kamera umfasst und der Schritt des Kalibrierens des Sichtsystems die Schritte umfasst, dass ein erstes Bild des Musters verarbeitet wird, wobei das erste Bild von der ersten Kamera erzeugt wird, ein zweites Bild des Musters verarbeitet wird, wobei das zweite Bild von der zweiten Kamera erzeugt wird, und das erste und das zweite Bild verglichen werden. Weitere Beispiele für Kamerasysteme bei Kraftfahrzeugen sind in DE 20 2015 101 259 U1, die den Oberbegriff des Anspruchs 1 zeigt, US 2020 / 156 559 A1, JP 2002 - 341432 A oder KR 2012 - 0066293 A gezeigt.

Nachteilig an der digitalen Kalibrierung ist jedoch zum einen, dass ein Prüfstand zur Justage/Einstellung des Kamerasystems notwendig ist und nicht immer Zugriff auf einen solchen Prüfstand besteht. Somit ist es beispielsweise im Ersatzfall nicht ohne erheblichen Aufwand möglich, die ursprüngliche richtlinienkonforme Ausrichtung wiederherzustellen.

Weiterhin ist es nachteilig, dass eine digitale Kalibrierung nicht ausreichend ist, wenn eine Fahrzeugkarosserie und/oder einzelne Bauteile des Kamerasystems mit ihrer Befestigung große fertigungsbedingte Toleranzen aufweisen/aufweist, so dass die digitale Kalibrierung zu gering für eine Justage auf den gewünschten Sichtbereich sein kann. Um diesen Nachteil zu kompensieren, können größere Bildsensoren oder Objektive verwendet werden, die den Justagebereich vergrößern, was jedoch mit höheren Kosten für die entsprechende Hardware und Software verbunden ist. Zudem kann es durch eine zu große digitale Verschiebung des Auslesebereichs auf dem Bildsensor dazu kommen, dass andere Verzeichnungsbereiche des Objektivs verwendet werden, was wiederum zu veränderten Verzeichnungen und/oder Verzerrungen des Kamerabildes führen kann. Dies ist unbedingt zu vermeiden, da sich sicherheitsrelevante oder sicherheitskritische Auswirkungen ergeben können.

Auch gibt es sogenannte Kugelkameras, bei der die Bildaufnahmeeinheit um einen festen Drehpunkt drehbar ist und so in Höhenrichtung und Seitenrichtung verstellt werden kann. Diese Kugelkameras sind jedoch hinsichtlich ihrer Genauigkeit nicht ausreichend, um den gewünschten Sichtbereich richtlinienkonform einstellen zu können und somit den Hauptspiegel und/oder den Weitwinkelspiegel ersetzen zu können.

Es ist also die Aufgabe der Erfindung, die Nachteile aus dem Stand der Technik zu vermeiden oder wenigstens zu verringern. Insbesondere soll ein Sichtsystem für ein Kraftfahrzeug bereitgestellt werden, das auch bei größeren Fertigungstoleranzen einfach und präzise ausgerichtet werden kann, um einen gewünschten Sichtbereich zuverlässig einsehen zu können. Das heißt, dass das Sichtsystem einen großen Justagebereich haben, gleichzeitig kostengünstig aufgebaut sein sowie mit geringem Aufwand innerhalb des Justagebereichs verstellbar sein soll.

Die Aufgabe der Erfindung wird durch ein Sichtsystem mit den Merkmalen des Anspruchs 1 gelöst. Vorteilhafte Ausgestaltungen sind in den Unteransprüchen beansprucht.

Demnach wird die Aufgabe der Erfindung bei einer gattungsgemäßen Vorrichtung erfindungsgemäß dadurch gelöst, dass die Bildaufnahmeeinheit-Halterung so ausgebildet ist, dass eine mechanische Einstellung des ersten Winkels unabhängig von einer mechanischen Einstellung des zweiten Winkels ist. Das heißt also, dass sich die Einstellung des ersten Winkels nicht auf die Einstellung des zweiten Winkels auswirkt bzw. jeglichen Einstellungskombinationen des ersten und zweiten Winkels innerhalb eines möglichen Einstellbereichs gewählt werden können.

Dies hat den Vorteil, dass insbesondere im Gegensatz zu Kugelkameras, bei denen die Bildaufnahmeeinheit um einen festen Drehpunkt frei drehbar ist und dadurch ebenfalls in zwei Richtungen verstellbar ist, die Verstellung des einen Winkels nicht zwangsweise Auswirkungen auf die Position des anderen Winkels hat, so dass der Nachteil von Kugelkameras vermieden wird, wonach nicht jede Ausrichtung möglich ist. Somit ist das erfindungsgemäße Sichtsystem flexibler einsetzbar, da es auch den gesetzlich vorgegebenen Richtlinien zum Einsehen des gewünschten Sichtbereichs genügt.

Gemäß einer bevorzugten Ausführungsform kann die Bildaufnahmeeinheit-Halterung so ausgebildet sein, dass eine Drehung zwischen der Trägerplatte und der Tragstruktur um die erste Achse um einen ersten Drehpunkt erfolgt und dass eine Drehung zwischen der Tragstruktur und dem Halter um die zweite Achse um einen zweiten Drehpunkt erfolgt, wobei der erste Drehpunkt zu dem zweiten Drehpunkt unterschiedlich ist. Mit anderen Worten ist die Bildaufnahmeeinheit-Halterung nicht als eine Kugelkamera-Halterung ausgebildet. Somit wird in vorteilhafter Weise die unabhängige Einstellbarkeit der beiden Winkel ermöglicht.

Gemäß einer bevorzugten Ausführungsform kann die Bildaufnahmeeinheit-Halterung so ausgebildet sein, dass die erste Achse und die zweite Achse einen Winkel von 45° bis 135° einschließen oder zueinander aufweisen. Das heißt, dass die beiden Achsen quer zueinander ausgerichtet/zueinander geneigt sind/nicht (im Wesentlichen) parallel oder identisch sind, um die mechanische Einstellbarkeit in zwei Richtungen realisieren zu können. Vorzugsweise können die erste Achse und die zweite Achse einen Winkel von 90° einschließen/zueinander aufweisen. Dies hat den Vorteil, dass eine Verstellung der einen Achse sich nicht auf die Verstellung der anderen Achse auswirkt bzw. nicht berücksichtigt werden muss. Beispielsweise kann die erste Achse (im montierten Zustand des Sichtsystems) einer Höhenachse des Kraftfahrzeugs entsprechen oder um bis zu 45° zu der Höhenachse des Kraftfahrzeugs geneigt sein. Dies hat den Vorteil, dass durch die Verdrehung um die erste Achse eine Seitenverstellung (Rechts-Links-Verstellung) der Bildaufnahmeeinheit möglich ist. Beispielsweise kann die zweite Achse (im montierten Zustand des Sichtsystems) einer Querachse des Kraftfahrzeugs entsprechen oder um bis zu 45° zu der Querachse des Kraftfahrzeugs geneigt sein. Dies hat den Vorteil, dass durch die Verdrehung um die zweite Achse eine Höhenverstellung (Oben-Unten-Verstellung/Auf-Ab-Verstellung) der Bildaufnahmeeinheit möglich ist. Das heißt also, dass die beiden Achsen bevorzugt senkrecht zueinander angeordnet sein können, aber nicht exakt senkrecht zueinander ausgerichtet sein müssen, so dass die Verstellung um die erste Achse etwa auch Auswirkungen auf die Oben-Unten-Position der Bildaufnahmeeinheit haben kann, die jedoch durch die Verstellung um die zweite Achse kompensiert werden kann, ohne die Rechts-Links-Position wiederum zu beeinflussen. Insbesondere kann die erste Achse exakt einer Vertikalrichtung, d.h. der Höhenachse des Kraftfahrzeugs, entsprechen, da eine solche Ausrichtung/Einstellmöglichkeit besonders einfach konstruktiv umsetzbar ist.

Gemäß einer bevorzugten Ausführungsform kann die Bildaufnahmeeinheit ein optisches Element mit einem Austrittspunkt, an dem eine optische Achse des optischen Elements aus dem optischen Element austritt, aufweist, wobei die erste Achse und/oder die zweite Achse einen Abstand zu dem Austrittspunkt haben, der maximal 100 Millimeter beträgt. Das heißt, dass die erste Achse und/oder die zweite Achse, vorzugsweise beide Achsen, in räumlicher Nähe zu dem Austrittspunkt liegen, d.h. vorzugsweise in einem Bereich einer theoretischen Kugel um den Austrittspunkt mit einem Radius von maximal 100mm liegen/die theoretische Kugel schneiden. Weiter bevorzugt kann der Abstand, den die erste Achse und/oder die zweite Achse zu dem Austrittspunkt haben, maximal 90 Millimeter, weiter bevorzugt 80 Millimeter, beispielsweise auch 70 Millimeter, 60 Millimeter oder 50 Millimeter, betragen. Dies hat den Vorteil, dass durch die räumliche Nähe zu dem Austrittspunkt das mechanische Verstellen der Bildaufnahmeeinheit-Halterung eine hohe Genauigkeit in ihrer Ausrichtung aufweist, so dass die Verstellung besonders fein/feinfühlig erfolgen kann.

Gemäß einer bevorzugten Ausführungsform kann die Bildaufnahmeeinheit-Halterung eine erste Justagekomponente zur mechanischen Einstellung des ersten Winkels aufweisen, wobei die erste Justagekomponente zur Winkeleinstellung quer zu der ersten Achse translatorisch verlagerbar ist. Das heißt, dass die erste Justagekomponente, etwa nach Art eines Hebels, zwischen der Trägerplatte und der Tragstruktur wirkt, so dass die Trägerplatte und die Tragstruktur zueinander um den ersten Drehpunkt in Abhängigkeit der translatorischen Verschiebung der ersten Justagekomponente gedreht/verschwenkt werden. Da eine translatorische Verschiebung konstruktiv einfach umsetzbar ist und zudem eine gewisse Übersetzung zwischen der translatorischen Verschiebung und der dadurch erzeugten Drehbewegung realisierbar ist, kann die mechanische Einstellung des ersten Winkels besonders präzise vorgenommen werden.

Alternativ kann die erste Justagekomponente zur Winkeleinstellung rotatorisch um die erste Achse antreibbar sein. Insbesondere kann die erste Justagekomponente durch eine mit der Tragstruktur oder der Trägerplatte fest verbundene oder insbesondere darin ausgebildete Geometrie sowie eine drehbar, aber axialfest (bzgl. ihrer Längsachse) in der jeweils anderen der Tragstruktur oder der Trägerplatte gelagerte Gegengeometrie gebildet sein. Beispielsweise kann die Gegengeometrie etwa in Form einer Schraube, insbesondere einer furchenden Schraube, eines zahnradförmigen Körpers, einer Spindel oder eines schneckenförmigen Körpers ausgebildet sein. Dabei stehen die Geometrie und die Gegengeometrie miteinander in Verzahnungseingriff, d.h. sie wirken formschlüssig zusammen, und/oder miteinander in Reibschluss/Kraftschluss, d.h. sie wirken kraftschlüssig zusammen, wobei eine Drehung der Gegengeometrie eine Drehung der Geometrie um die erste Achse hervorruft. Mit anderen Worten können die Geometrie und die Gegengeometrie nach Art eines Schneckengetriebes zusammenwirken, um die Drehung um die erste Achse hervorzurufen. Alternativ oder zusätzlich können die Geometrie und die Gegengeometrie mittels einer reibenden Beschichtung, etwa über eine Kunststoffbeschichtung oder eine Konusgeometrie, zusammenwirken, um die Drehung um die erste Achse hervorzurufen

Gemäß einer bevorzugten Ausführungsform kann die Bildaufnahmeeinheit-Halterung eine zweite Justagekomponente zur mechanischen Einstellung des zweiten Winkels aufweisen, wobei die zweite Justagekomponente zur Winkeleinstellung quer zu der zweiten Achse translatorisch verlagerbar ist. Das heißt, dass die zweite Justagekomponente, etwa nach Art eines Hebels, zwischen der Tragstruktur und dem Halter wirkt, so dass die Tragstruktur und der Halter zueinander um den zweiten Drehpunkt in Abhängigkeit der translatorischen Verschiebung der zweiten Justagekomponente gedreht/verschwenkt werden. Da eine translatorische Verschiebung konstruktiv einfach umsetzbar ist und zudem eine gewisse Übersetzung zwischen der translatorischen Verschiebung und der dadurch erzeugten Drehbewegung realisierbar ist, kann die mechanische Einstellung des zweiten Winkels besonders präzise vorgenommen werden.

Alternativ kann die zweite Justagekomponente zur Winkeleinstellung rotatorisch um die zweite Achse antreibbar sein. Insbesondere kann die zweite Justagekomponente durch eine mit der Tragstruktur oder dem Halter fest verbundene oder insbesondere darin ausgebildete Geometrie sowie eine drehbar, aber axialfest (bzgl. ihrer Längsachse) in der jeweils anderen der Tragstruktur oder des Halters gelagerte Gegengeometrie gebildet sein. Beispielsweise kann die Gegengeometrie etwa in Form einer Schraube, insbesondere einer furchenden Schraube, eines zahnradförmigen Körpers, einer Spindel oder eines schneckenförmigen Körpers ausgebildet sein. Dabei stehen die Geometrie und die Gegengeometrie miteinander in Verzahnungseingriff, d.h. sie wirken formschlüssig zusammen, und/oder miteinander in Reibschluss/Kraftschluss, d.h. sie wirken kraftschlüssig zusammen, wobei eine Drehung der Gegengeometrie eine Drehung der Geometrie um die zweite Achse hervorruft. Mit anderen Worten können die Geometrie und die Gegengeometrie nach Art eines Schneckengetriebes zusammenwirken, um die Drehung um die zweite Achse hervorzurufen. Alternativ oder zusätzlich können die Geometrie und die Gegengeometrie mittels einer reibenden Beschichtung, etwa über eine Kunststoffbeschichtung oder eine Konusgeometrie, zusammenwirken, um die Drehung um die zweite Achse hervorzurufen.

Anders ausgedrückt kann die (erste und/oder zweite) Justagekomponente eine definierte Geometrie aufweisen, die in eine entsprechende Gegengeometrie an der Trägerplatte, an der Tragstruktur oder an dem Halter eingreift, und somit die Veränderung des ersten bzw. zweiten Winkels verursacht. Das heißt, dass beispielsweise eine erste Schraube und/oder eine zweite Schraube gegen eine Gegengeometrie drücken. Auch kann die (erste und/oder zweite) Justagekomponente ein zylindrischer Körper sein, der eine an der Mantelfläche helixförmige Kontur aufweist, wobei der zylindrische Körper über eine Antriebsgeometrie um seine Längsachse drehbar ist, während er in eine an der Trägerplatte, an der Tragstruktur oder an dem Halter ausgebildete Gegengeometrie eingreift. Das heißt, dass eine Spindel nach einem Schneckenwirkprinzip in eine Zahnform eingreift.

Gemäß einer Weiterbildung der bevorzugten Ausführungsform können/kann die erste Justagekomponente und/oder die zweite Justagekomponente so ausgebildet sein, dass die mechanische Einstellung des ersten Winkels und/oder des zweiten Winkels stufenlos erfolgt. Dies hat den Vorteil, dass eine besonders genaue Ausrichtung der Bildaufnahmeeinheit vorgenommen werden kann.

Gemäß einer Weiterbildung der bevorzugten Ausführungsform können/kann die erste Justagekomponente und/oder die zweite Justagekomponente so ausgebildet sein, dass sie eine Vielzahl von Rastpositionen, in der die jeweilige Winkelposition verriegelt ist. Dadurch können die Winkel besonders einfach in die vordefinierten Rastpositionen verstellt werden.

Gemäß einer Weiterbildung der bevorzugten Ausführungsform können/kann die erste Justagekomponente und/oder die zweite Justagekomponente so ausgebildet sein, dass die mechanische Einstellung des ersten Winkels und/oder des zweiten Winkels selbsthemmend ausgebildet ist. Das heißt, dass sich die Position des ersten Winkels und/oder des zweiten Winkels nicht selbsttätig verstellen kann, sondern die eingestellte Position beibehalten wird. Somit ist eine besonders einfache Justierbarkeit möglich.

Gemäß einer bevorzugten Ausführungsform kann eine Position des ersten Winkels über ein erstes Fixierelement der Bildaufnahmeeinheit-Halterung oder über Selbsthemmung fixierbar sein. Dies hat den Vorteil, dass die (einmal eingestellte) Winkelposition sich nicht unbeabsichtigt, etwa durch versehentliches Verstellen der ersten Justagekomponente, verändert. Das erste Fixierelement kann beispielsweise als eine Schraube, ein Niet, Kleber, eine Klemme, ein Stift oder dergleichen ausgebildet sein. Insbesondere kann das erste Fixierelement die Winkelposition kraftschlüssig und oder stoffschlüssig fixieren. Die kraftschlüssige Fixierung, insbesondere durch die Selbsthemmung, kann insbesondere dadurch erreicht werden, dass die Winkelposition aufgrund von Temperaturen oder Vibration nicht möglich ist.

Gemäß einer Weiterbildung der bevorzugten Ausführungsform weist das Sichtsystem sowohl die erste Justagekomponente als auch das erste Fixierelement auf, so dass eine feine Verstellung möglich ist und gleichzeitig die Position sicher festgestellt werden kann.

Gemäß einer bevorzugten Ausführungsform kann eine Position des zweiten Winkels über ein zweites Fixierelement der Bildaufnahmeeinheit-Halterung oder über Selbsthemmung fixierbar sein. Dies hat den Vorteil, dass die (einmal eingestellte) Winkelposition sich nicht unbeabsichtigt, etwa durch versehentliches Verstellen der zweiten Justagekomponente, verändert. Das zweite Fixierelement kann beispielsweise als eine Schraube, ein Niet, Kleber, eine Klemme, ein Stift oder dergleichen ausgebildet sein. Insbesondere kann das zweite Fixierelement die Winkelposition kraftschlüssig und oder stoffschlüssig fixieren. Die kraftschlüssige Fixierung, insbesondere durch die Selbsthemmung, kann insbesondere dadurch erreicht werden, dass die Winkelposition aufgrund von Temperaturen oder Vibration nicht möglich ist.

Gemäß einer Weiterbildung der bevorzugten Ausführungsform weist das Sichtsystem sowohl die zweite Justagekomponente als auch das zweite Fixierelement auf, so dass eine feine Verstellung möglich ist und gleichzeitig die Position sicher festgestellt werden kann.

Gemäß einer Weiterbildung der bevorzugten Ausführungsform können/kann das erste Fixierelement ein erstes Sicherungselement und/oder des zweite Fixierelement ein zweites Sicherungselement aufweisen, das ein Lösen des jeweiligen Fixierelements und/oder Verstellen des jeweiligen Winkels sichtbar macht. Das erste Sicherungselement und/oder das zweite Sicherungselement können/kann beispielsweise als ein Siegel, eine Farbmarkierung, eine Verplombung oder dergleichen ausgebildet sein. Das (erste und/oder zweite) Sicherungselement dient also dazu, eine missbräuchliche Verstellung oder Verdrehung erkenntlich zu machen. So kann beispielsweise sichergestellt werden, dass eine nachträgliche und/oder unsachgemäße Verstellung der Bildaufnahmeeinheit-Halterung von einer initialen Einstellung der Bildaufnahmeeinheit-Halterung unterschieden werden kann.

Gemäß einer bevorzugten Ausführungsform kann die Bildaufnahmeeinheit-Halterung eine erste Anzeigeskala, auf der eine Position des ersten Winkels angezeigt ist, und/oder eine zweite Anzeigeskala, auf der eine Position des zweiten Winkels angezeigt ist, aufweisen. So kann leicht erkannt werden, wie weit der jeweilige Winkel bereits verstellt wurde bzw. in welcher Position er sich befindet. Insbesondere können die beiden Anzeigeskalen aufeinander abgestimmt sein, so dass beispielsweise bei einer Verstellung der ersten Achse, die sich aufgrund ihrer konstruktiven Umsetzung auch auf die Verstellung der zweiten Achse auswirkt, auch die zweite Anzeigeskala entsprechend verstellt wird.

Offenbarungsgemäß ist das Sichtsystem so ausgebildet, dass die Bildaufnahmeeinheit einen IST-Sichtbereich aufnimmt und der IST-Sichtbereich mittels der mechanischen Einstellung des ersten Winkels und/oder des zweiten Winkels auf einen SOLL-Sichtbereich justierbar ist. So können die Fertigungstoleranzen der Bildaufnahmeeinheit-Halterung kompensiert werden.

Gemäß der vorliegenden Offenbarung weist das Sichtsystem eine mit der Bildaufnahmeeinheit verbundene Wiedergabeeinheit, wie einem Monitor, auf, auf der das eingesehene Sichtfeld darstellbar ist, wobei das Sichtsystem derart ausgebildet ist, dass der SOLL-Sichtbereich über einen Soll-Punkt oder einen Soll-Bereich als Einblendung auf der Wiedergabeeinheit oder über ein auf der Wiedergabeeinheit positioniertes, zumindest teilweise lichtdurchlässiges Element, beispielsweise eine Folie, eingeblendet wird und der IST-Sichtbereich mittels der mechanischen Einstellung des ersten Winkels und/oder des zweiten Winkels auf den SOLL-Sichtbereich justiert wird.

Gemäß einer bevorzugten Ausführungsform kann die optische Achse der Bildaufnahmeeinheit einen Schnittpunkt mit einem gesetzlichen Sichtfeld auf einer Sichtfeldebene haben. Dabei ist das gesetzliche Sichtfeld vorzugsweise ein Sichtfeld nach UN/ECE-R46, insbesondere der Gruppe II oder **IV,** oder ein Sichtfeld nach ISO 5721-2. So kann eine richtlinienkonforme Einstellung gewährleistet werden.

Gemäß einer bevorzugten Ausführungsform kann der Soll-Sichtbereich innerhalb einer Monitor Defined Size nach UN/ECE-R46 liegen, wenn er auf der Wiedergabeeinheit dargestellt wird oder über das zumindest teilweise lichtdurchlässige Element eingeblendet wird.

Gemäß einer bevorzugten Ausführungsform kann im Soll-Sichtbereich wenigstens ein Zielpunkt liegen, der insbesondere am oder um das Kraftfahrzeug herum angeordnet ist, bevorzugt nahe des Schnittpunks zwischen dem Sichtfeld und der optischen Achse, weiter bevorzugt innerhalb von 20% eines angezeigten Sichtbereichs einer Optik auf der Wiedergabeeinheit. Somit wird vermieden, dass eine Optiktoleranz erheblich steigt.

Gemäß einer bevorzugten Ausführungsform kann der Soll-Sichtbereich über eine konzentrische Skala angezeigt werden. Vorzugsweise kann die Justierung mittels der konzentrischen Skala erfolgen. Alternativ oder zusätzlich kann die Justierung mittels der ersten Anzeigeskala und/oder der zweiten Anzeigeskala erfolgen. So kann die Verstellung besonders einfach durchgeführt werden. Vorzugsweise können die Anzeigeskalen aufeinander abgestimmt sein.

Gemäß einer bevorzugten Ausführungsform kann das Sichtsystem zusätzlich zu der mechanischen Einstellung eine digitale Kalibrierung aufweisen. Dies hat den Vorteil, dass eine grobe Voreinstellung über die Mechanik und eine feine Nacheinstellung über die digitale Kalibrierung erfolgen kann.

Gemäß einer bevorzugten Ausführungsform kann das Sichtsystem nur eine Optik zusammen mit einem Bildsensor aufweisen. So kann ein besonders kostengünstiges und kompaktes Sichtsystem bereitgestellt werden. Beispielsweise ist es möglich, dass der Bildsensor einen Bereich aufnimmt/erfasst, in dem zwei gesetzliche Sichtfelder, etwa die Sichtfelder der Gruppe II und **IV,** enthalten sind. Vorzugsweise ist das Sichtsystem so ausgebildet, dass der aufgenommene Bereich richtlinienkonform, insbesondere die beiden gesetzlichen Sichtfelder separat, auf der Wiedergabeeinheit dargestellt werden.

Mit anderen Worten betrifft die Erfindung ein indirektes Sichtsystem für ein (Kraft-) Fahrzeug, mit einer Bildaufnahmeeinheit, die einen Sichtbereich um ein Fahrzeug einsieht; einer Trägerplatte, die mit der Bildaufnahmeeinheit in einer definierten Position verbunden ist oder in die Bildaufnahmeeinheit integriert ist; einem Halter, der über eine Fahrzeugschnittstelle direkt oder indirekt mit dem Fahrzeug verbunden ist; und einer Tragstruktur, die die Trägerplatte und den Halter miteinander verbindet. Die Trägerplatte ist mit der Tragstruktur über eine Drehverbindung um eine erste Achse drehbar verbunden und mit dem Halter über eine Drehverbindung um eine zweite Achse drehbar verbunden. Zudem besitzt das indirekte Sichtsystem wenigstens eine erste Justagekomponente, die eine Veränderung eines ersten Winkels zwischen der Trägerplatte und der Tragstruktur um deren gemeinsame erste Achse ermöglicht, sowie wenigstens eine zweite Justagekomponente, die eine Veränderung eines zweiten Winkels zwischen der Trägerplatte und dem Halter um deren gemeinsame zweite Achse ermöglicht. Das Sichtsystem ist so ausgebildet, dass die Bildaufnahmeeinheit einen Ist-Sichtbereich aufnimmt und die Bildaufnahmeeinheit, mittels der Justagekomponenten über die erste Achse und über die zweite Achse, auf einen Soll-Sichtbereich justierbar ist.

Vorzugsweise können die erste Achse und die zweite Achse einen Winkel zwischen 45° bis 135° zueinander aufweisen. Dadurch ist eine aufwärts/abwärts bzw. eine seitlich nach links/rechts gerichtete Justagebewegung möglich. Vorzugsweise kann die Bildaufnahmeeinheit ein optisches Element mit einer optischen Achse beinhalten, und die erste Achse und die zweite Achse können in räumlicher Nähe zu einem Austrittspunkt der optischen Achse aus dem ersten optischen Element liegen. Insbesondere können die erste Achse und die zweite Achse in einem Bereich einer theoretischen Kugel mit einem Mittelpunkt im Austrittspunkt der optischen Achse zum ersten optischen Element und einem Radius von maximal 100mm liegen. Vorzugsweise kann die wenigstens eine (erste oder zweite) Justagekomponente eine definierte Geometrie aufweisen, die in eine entsprechende Gegengeometrie an der Trägerplatte, an der Tragstruktur oder an dem Halter eingreift, so dass die Veränderung des ersten Winkels oder zweiten Winkels ermöglicht wird. Beispielsweise können eine erste Schraube und eine zweite Schraube gegen eine Gegengeometrie drücken. Insbesondere kann die Veränderung des ersten Winkels oder des zweiten Winkels mittels der wenigstens einen (ersten oder zweiten) Justagekomponente stufenlos erfolgen. Vorzugsweise kann die wenigstens eine (erste oder zweite) Justagekomponente in der Trägerplatte, in der Tragstruktur oder in dem Halter ortsfest positioniert sein oder drehbar gelagert sein. Vorzugsweise kann die wenigstens eine (erste oder zweite) Justagekomponente ein zylindrischer Körper mit einer an der Mantelfläche helixförmig verlaufenden Kontur. Insbesondere kann das Sichtsystem eine Antriebsgeometrie, mit der der zylindrische Körper um seine Längsachse drehbar ist, und eine an der Trägerplatte, an der Tragstruktur oder an dem Halter ausgebildete Gegengeometrie, in welche die helixförmig verlaufende Kontur eingreift oder diese aufnimmt, aufweisen. Beispielsweise kann die Justagekomponente in Form einer Spindel, die in eine Zahnform eingreift, ausgebildet sein, d.h. nach dem Schneckenwirkprinzip ausgebildet sein. Vorzugsweise kann die Justagekomponente eine Schraube, insbesondere eine furchende Schraube, ein zahnradförmiger Körper, eine Spindel oder ein schneckenförmiger Körper sein. Vorzugsweise kann die Verbindung der definierten Geometrie der Justagekomponente und der Gegengeometrie der Trägerplatte, der Tragstruktur oder des Halters selbsthemmend sein. Vorzugsweise kann die Veränderung des ersten Winkels und des zweiten Winkels über wenigstens ein Fixierelement, wie eine Schraube, ein Niet, Kleber, eine Klemme, einen Stift oder dergleichen, oder über eine Selbsthemmung fixiert sein. Durch einen Kraftschluss ist eine Verstellung des Winkels aufgrund von Temperaturen oder Vibrationen nicht mehr möglich. Vorzugsweise kann das Fixierelement über ein Sicherungselement verfügen, um eine missbräuchliche Verstellung oder Veränderung erkenntlich zu machen. Beispielsweise kann das Sicherungselement als ein Siegel, eine Farbmarkierung, eine Verplombung oder dergleichen ausgebildet sein. Vorzugsweise kann das Sichtsystem eine Anzeigeskala aufweisen, die auf der Justagekomponente, der Trägerplatte, der Tragstruktur und/oder dem Halter angebracht ist und über welche die Veränderung des ersten Winkels oder zweiten Winkels einstellbar oder positionierbar ist. Vorzugsweise kann das Sichtsystem eine Rasterung aufweisen, die an der Justagekomponente, der Trägerplatte, der Tragstruktur und/oder dem Halter angeordnet ist. Die Rasterung dient zur Unterstützung der Selbsthemmung oder zur definierten Einstellung des Winkels oder zu einem zusätzlichen Formschluss.

Vorzugsweise kann das Sichtsystem eine Wiedergabeeinheit, wie einen Monitor, aufweisen, auf welcher der von der Bildaufnahmeeinheit aufgenommene Ist-Sichtbereich für einen Fahrer darstellbar ist.

Vorzugsweise kann die optische Achse der Bildaufnahmeeinheit einen Schnittpunkt mit einem gesetzlichen Sichtfeld auf einer Sichtfeldebene haben. Die Sichtfeldebene ist eine definierte Ebene, auf der sich eine Sichtfeldgeometrie befindet. Vorzugsweise kann das gesetzliche Sichtfeld wenigstens ein Sichtfeld nach UN/ECE-R46, insbesondere der Gruppe II oder IV, oder ein Sichtfeld nach ISO 5721-2 sein. Vorzugsweise kann der Soll-Sichtbereich, wenn er auf der Wiedergabeeinheit dargestellt wird, innerhalb der Monitor Defined Size nach UN/ECE-R46 liegen. Dabei muss die Monitor Defined Size nach UN/ECE-R46 das gesetzliche Sichtfeld enthalten. Die Monitor Defined Size kann beispielsweise als Overlay auf der Wiedergabeeinheit angezeigt werden oder es kann eine transparente Folie auf die Wiedergabeeinheit gelegt werden. Vorzugsweise kann im Soll-Sichtbereich wenigstens ein Zielpunkt liegen, der am oder um das Fahrzeug herumliegt, vorzugsweise nahe des Schnittpunkts der optischen Achse mit dem Soll-Sichtbereich, weiter bevorzugt innerhalb von 20% des angezeigten Sichtbereichs der Optik auf der Wiedergabeeinheit. Bei mehr als 10% Entfernung des Zielpunktes von der optischen Achse steigt die Optiktoleranz erheblich. Der Zielpunkt liegt um das Fahrzeug und generiert einen Ist-Punkt auf dem Monitor. Durch die Justage muss der Ist-Punkt (wird auf dem Monitor abgebildet) auf den Soll-Punkt (fix auf dem Monitor, z.B. als Overlay oder auf einer Folie oder herausgemessen) bewegt werden. Vorzugsweise kann der Soll-Sichtbereich über einen Soll-Punkt oder einen Soll-Bereich auf der Wiedergabeeinheit als Einblendung (Overlay) eingeblendet werden, oder über eine transparente Folie auf der Wiedergabeeinheit positioniert werden, wobei der Soll-Bereich über eine konzentrische Skala, d.h. beispielsweise konzentrische Kreise wie eine Zielscheibe, bei der z.B. pro Kreis einer Rotation um 1° der Kamera entspricht, angezeigt wird. Vorzugsweise kann die Justage der Bildaufnahmeeinheit mittels des Soll-Punktes oder des Soll-Bereichs oder der konzentrischen Skala erfolgen. Vorzugsweise kann die Justage der Bildaufnahmeeinheit mittels des Soll-Punktes oder des Soll-Bereichs oder der konzentrischen Skala und in Kombination mit der korrespondierenden Anzeigeskala erfolgen, wobei die Anzeigeskala auf der Justagekomponente, der Trägerplatte, der Tragstruktur und/oder dem Halter angebracht ist. Beispielsweise kann auf der konzentrischen Skala auf dem Monitor abgelesen werden, wie viel mittels der Justagekomponente über die Anzeigeskala eingestellt werden muss.

Vorzugsweise kann die Bildaufnahmeeinheit zusätzlich über eine digitale Kalibrierung verfügen. Dies ermöglicht, dass mit der mechanischen Justage eine "grobe" Vorjustage erfolgen kann und mit der digitalen Kalibrierung eine "feine" Einstellung erfolgen kann, da die digitale Kalibrierung üblicherweise nur einen Verstellbereich von +/- 2° hat. Vorzugsweise kann die Bildaufnahmeeinheit nur eine Optik zusammen mit einem Bildsensor aufweisen.

Die Erfindung hat die Vorteile, dass Bauteiltoleranzen von der Fahrzeugkarosserie und der Kamerahalterung durch die mechanische Justage ausgeglichen werden können, dass ein digitaler Kalibrierungsbereich für die Feinjustage vollständig erhalten bleiben kann, da durch die zuvor erfolgte mechanische Justage bereits ein Großteil der auszugleichenden Toleranzen kompensiert wurden, dass durch die mechanische Justage auch gleiche Kamerahalterungen für mehrere Fahrzeugvarianten verwendet werden können, dass es im Nachrüstbereich leicht möglich ist, die ursprüngliche Ausrichtung der Kamera wiederherzustellen, und dass eine mechanische Justage ohne aufwändige digitale Kalibrierung möglich ist, da im Gegensatz dazu kein Diagnosegerät und keine spezielle Software erforderlich ist.

Die Erfindung wird nachfolgend mit Hilfe von Zeichnungen erläutert. Es zeigen:
- Fign. 1 und 2: eine erste Ausführungsform eines Sichtsystems,
- Fign. 3 bis 6: eine zweite Ausführungsform des Sichtsystems,
- Fign. 7 und 8: eine dritte Ausführungsform des Sichtsystems,
- Fign. 9 bis 13: eine vierte Ausführungsform des Sichtsystems,
- Fig. 14: eine fünfte Ausführungsform des Sichtsystems,
- Fig. 15: eine sechste Ausführungsform des Sichtsystems,
- Fign. 16 bis 20: Darstellung eines durch das Sichtsystem einsehbaren Sichtfelds.

Die Figuren sind lediglich schematischer Natur und dienen ausschließlich dem Verständnis der Erfindung. Die gleichen Elemente sind mit denselben Bezugszeichen gekennzeichnet. Merkmale unterschiedlicher Ausführungsformen können beliebig miteinander kombiniert werden.

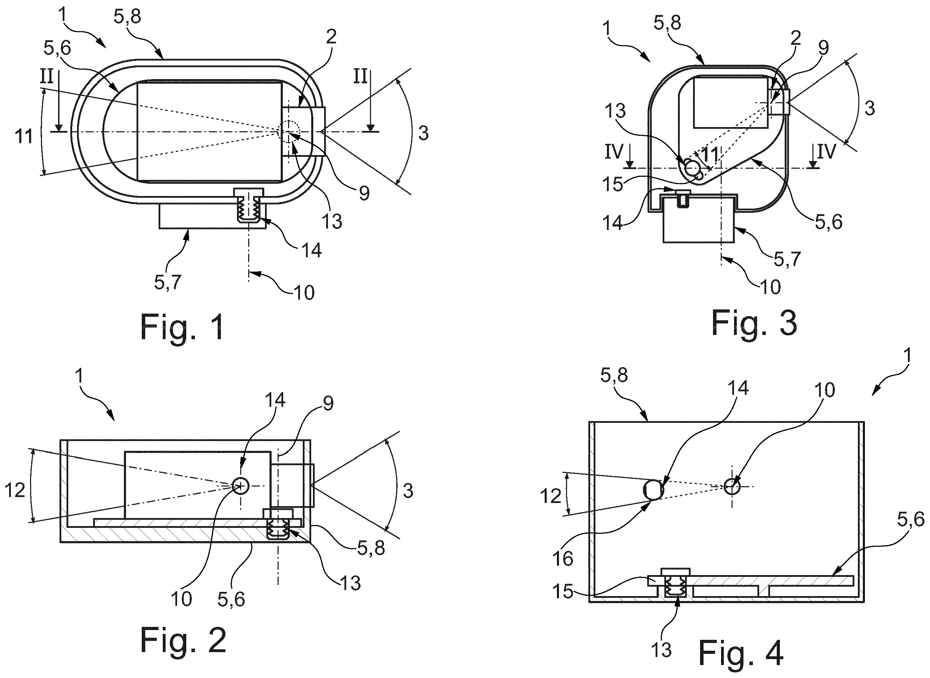

Fign. 1 und 2 zeigen eine erste Ausführungsform eines indirekten Sichtsystems 1 für ein Kraftfahrzeug.

Das Sichtsystem 1 weist eine Bildaufnahmeeinheit 2, wie eine Kamera, auf, mit der ein Sichtbereich 3 um das Kraftfahrzeug einsehbar ist und die mit einer (in Fign. 1 und 2 nicht dargestellten) Wiedergabeeinheit 4 verbindbar ist, um das eingesehene Sichtfeld auf der Wiedergabeeinheit 4 darzustellen.

Das Sichtsystem 1 weist eine Bildaufnahmeeinheit-Halterung 5 zum Anbringen der Bildaufnahmeeinheit 2 an dem Kraftfahrzeug auf. Die Bildaufnahmeeinheit-Halterung 5 weist eine mit der Bildaufnahmeeinheit 2 fest verbundene Trägerplatte 6 auf. Die Trägerplatte 6 kann auch in die Bildaufnahmeeinheit 2 integriert sein. Die Bildaufnahmeeinheit-Halterung 5 weist einen mit dem Kraftfahrzeug fest verbindbaren Halter 7 auf. Der Halter 7 kann direkt oder indirekt mit dem Kraftfahrzeug verbindbar sein. Die Bildaufnahmeeinheit-Halterung 5 weist eine die Trägerplatte 6 und den Halter 7 verbindende Tragstruktur 8 auf. Die Bildaufnahmeeinheit-Halterung 5 ist so ausgebildet, dass die Trägerplatte 6 und die Tragstruktur 8 zueinander um eine erste Achse 9 drehbar verbunden sind. Die Bildaufnahmeeinheit-Halterung 5 ist so ausgebildet, dass die Tragstruktur 8 und der Halter 7 zueinander um eine zweite Achse 10 drehbar verbunden sind. Das heißt, dass ein erster Winkel 11 zwischen der Trägerplatte 6 und der Tragstruktur 8 um die erste Achse 9 und ein zweiter Winkel 12 zwischen der Tragstruktur 8 und dem Halter 7 um die zweite Achse 10 mechanisch (durch relative Drehung der beiden Bauteile 6, 8 bzw. der beiden Bauteile 7, 8 um die jeweilige Achse 9, 10) einstellbar ist.

Fig. 1 zeigt das Sichtsystem 1 in einer Schnittdarstellung in einer Ebene, die die zweite Achse 10 enthält. Fig. 2 zeigt Sichtsystem 1 in einer Schnittdarstellung in einer Ebene, die entlang der Linie II aus Fig. 1 geschnitten ist und die die erste Achse 9 enthält.

In dem Sichtsystem 1 ist die Bildaufnahmeeinheit-Halterung 5 so ausgebildet, dass eine mechanische Einstellung des ersten Winkels 11 unabhängig von einer mechanischen Einstellung des zweiten Winkels 12 ist. Somit ist das Sichtsystem 1 so ausgebildet ist, dass die Bildaufnahmeeinheit 2 einen IST-Sichtbereich aufnimmt und der IST-Sichtbereich mittels der mechanischen Einstellung des ersten Winkels 11 und/oder des zweiten Winkels 12 auf einen SOLL-Sichtbereich justierbar ist.

In der in Fign. 1 und 2 dargestellten ersten Ausführungsform des Sichtsystems 1 sind die erste Achse 9 und die zweite Achse 10 senkrecht zueinander ausgerichtet. Insbesondere entspricht die erste Achse 9 einer Fahrzeughöhenrichtung, während die zweite Achse 10 einer Fahrzeugquerrichtung entspricht. Dabei sind die erste Achse 9 und die zweite Achse 10 in einer Fahrzeuglängsrichtung zueinander versetzt, so dass sich kein Schnittpunkt zwischen den beiden Achsen 9, 10 ergibt.

Die Trägerplatte 6 und die Tragstruktur 8 sind miteinander über ein lösbares erstes Fixierelement 13 verbunden (vgl. Fig. 2). In einem befestigten Zustand des ersten Fixierelements 13 ist die Relativverdrehung zwischen der Trägerplatte 6 und der Tragstruktur 8 durch das erste Fixierelement 13 unterbunden, so dass eine Position des ersten Winkels 11 fixiert ist. In einem gelösten Zustand des ersten Fixierelements 13 ist die Relativverdrehung zwischen der Trägerplatte 6 und der Tragstruktur 8 frei möglich, so dass eine Position des ersten Winkels 11 mechanisch einstellbar/verstellbar ist. In der dargestellten Ausführungsform ist das erste Fixierelement 13 als eine Schraube ausgebildet, die in ihrem angezogenen Zustand die Trägerplatte 6 und die Tragstruktur 8 kraftschlüssig miteinander verbindet. Dabei ist ein Innengewinde in der Trägerplatte 6 oder der Tragstruktur 8 ausgebildet, in das die Schraube eingreift, um die Trägerplatte 6 und die Tragstruktur 8 kraftschlüssig drehfest miteinander zu verbinden.

Der Halter 7 und die Tragstruktur 8 sind miteinander über ein lösbares zweites Fixierelement 14 verbunden (vgl. Fig. 1). In einem befestigten Zustand des zweiten Fixierelements 14 ist die Relativverdrehung zwischen dem Halter 7 und der Tragstruktur 8 durch das zweite Fixierelement 14 unterbunden, so dass eine Position des zweiten Winkels 12 fixiert ist. In einem gelösten Zustand des zweiten Fixierelements 14 ist die Relativverdrehung zwischen dem Halter 7 und der Tragstruktur 8 frei möglich, so dass eine Position des zweiten Winkels 12 mechanisch einstellbar/verstellbar ist. In der dargestellten Ausführungsform ist das zweite Fixierelement 14 als eine Schraube ausgebildet, die in ihrem angezogenen Zustand den Halter 7 und die Tragstruktur 8 kraftschlüssig miteinander verbindet. Dabei ist ein Innengewinde in dem Halter 7 oder der Tragstruktur 8 ausgebildet, in das die Schraube eingreift, um die Trägerplatte 6 und die Tragstruktur 8 kraftschlüssig drehfest miteinander zu verbinden.

Fign. 3 bis 6 zeigen eine zweite Ausführungsform des indirekten Sichtsystems 1 für das Kraftfahrzeug. Das Sichtsystem 1 gemäß der zweiten Ausführungsform entspricht im Wesentlichen dem Sichtsystem 1 gemäß der ersten Ausführungsform und weist die Bildaufnahmeeinheit 2 und die Bildaufnahmeeinheit-Halterung 5 auf, wobei die Bildaufnahmeeinheit-Halterung 5 wiederum die Trägerplatte 6, den Halter 7 sowie die Tragstruktur 8 aufweist. Dabei ist die Bildaufnahmeeinheit-Halterung 5 so ausgebildet, dass die Trägerplatte 6 und die Tragstruktur 8 zueinander um die erste Achse 9 drehbar verbunden sind und die Tragstruktur 8 und der Halter 7 zueinander um die zweite Achse 10 drehbar verbunden sind, so dass der erste Winkel 11 zwischen der Trägerplatte 6 und der Tragstruktur 8 um die erste Achse 9 und der zweite Winkel 12 zwischen der Tragstruktur 8 und dem Halter 7 um die zweite Achse 10 mechanisch (durch relative Drehung der beiden Bauteile 6, 8 bzw. der beiden Bauteile 7, 8 um die jeweilige Achse 9, 10) einstellbar ist.

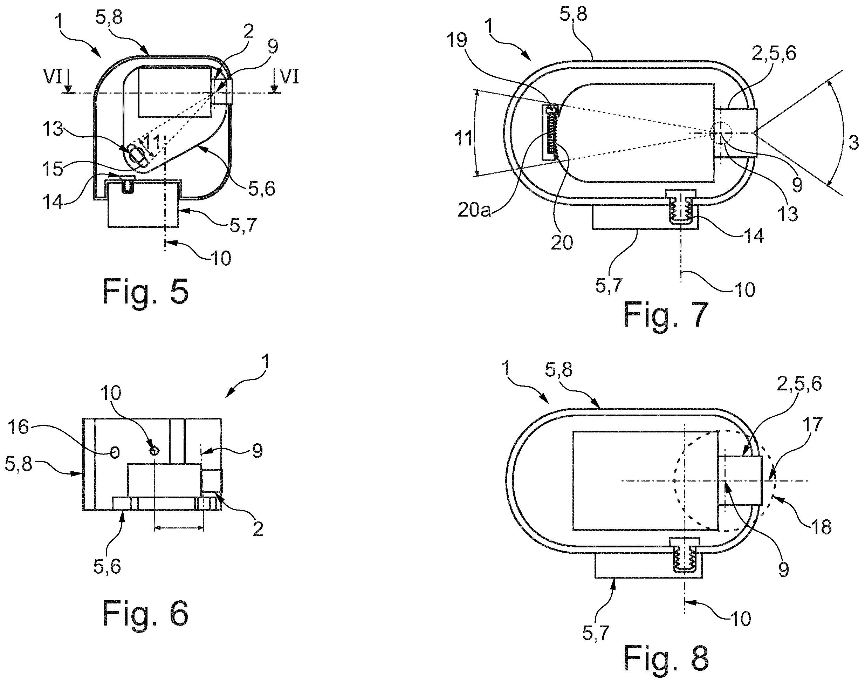

Fign. 3 und 6 zeigen das Sichtsystem 1 in einer Schnittdarstellung in einer Ebene, die die zweite Achse 10 enthält. Fig. 4 zeigt das Sichtsystem 1 in einer Schnittdarstellung in einer Ebene, die entlang der Linie IV aus Fig. 3 geschnitten ist. Fig. 6 zeigt das Sichtsystem 1 in einer Schnittdarstellung in einer Ebene, die entlang der Linie VI aus Fig. 5 geschnitten ist und die die erste Achse 9 enthält.

In der in Fign. 3 bis und 6 dargestellten zweiten Ausführungsform des Sichtsystems 1 sind die erste Achse 9 und die zweite Achse 10 geneigt zueinander ausgerichtet, so dass ein Winkel von 45° bis 135° eingeschlossen wird. Insbesondere ist die erste Achse 9 um etwa 45° zu der Fahrzeugquerrichtung und der Fahrzeuglängsrichtung geneigt, während die zweite Achse 10 der Fahrzeugquerrichtung entspricht. Dabei sind die erste Achse 9 und die zweite Achse 10 in der Fahrzeuglängsrichtung zueinander versetzt, so dass sich kein Schnittpunkt zwischen den beiden Achsen 9, 10 ergibt.

Die Trägerplatte 6 und die Tragstruktur 8 sind miteinander über das lösbare erste Fixierelement 13 verbunden (vgl. Fign. 3 und 5). In der dargestellten Ausführungsform ist das erste Fixierelement 13 als eine Schraube ausgebildet, die in ihrem angezogenen Zustand die Trägerplatte 6 und die Tragstruktur 8 kraftschlüssig miteinander verbindet. Dabei ist ein Innengewinde in der Tragstruktur 8 ausgebildet, in das die Schraube eingreift, um die Trägerplatte 6 und die Tragstruktur 8 kraftschlüssig drehfest miteinander zu verbinden. In der Trägerplatte 6 ist ein erstes Langloch 15 ausgebildet, durch welches die Schraube durchgreift, um in das Innengewinde einzugreifen, so dass dadurch der Verstellbereich des ersten Winkels 11 begrenzt wird.

Der Halter 7 und die Tragstruktur 8 sind miteinander über das lösbare zweite Fixierelement 14 verbunden (vgl. Fign. 4 und 6). In der dargestellten Ausführungsform ist das zweite Fixierelement 14 als eine Schraube ausgebildet, die in ihrem angezogenen Zustand den Halter 7 und die Tragstruktur 8 kraftschlüssig miteinander verbindet. Dabei ist ein Innengewinde in der Tragstruktur 8 ausgebildet, in das die Schraube eingreift, um den Halter 7 und die Tragstruktur 8 kraftschlüssig drehfest miteinander zu verbinden. In dem Halter 7 ist ein zweites Langloch 16 ausgebildet, durch welches die Schraube durchgreift, um in das Innengewinde einzugreifen, so dass dadurch der Verstellbereich des zweiten Winkels 12 begrenzt wird.

In Fig. 6 ist zudem zu erkennen, dass in der Ebene betrachtet, die die erste Achse 9 enthält, ein Winkel von etwa 5° bis 25° zwischen den beiden Achsen 9, 10 eingeschlossen wird.

Fign. 7 und 8 zeigen eine dritte Ausführungsform des indirekten Sichtsystems 1 für das Kraftfahrzeug. Das Sichtsystem 1 gemäß der dritten Ausführungsform entspricht im Wesentlichen dem Sichtsystem 1 gemäß der ersten Ausführungsform und unterscheidet sich nur dadurch, dass in der ersten Ausführungsform die Bildaufnahmeeinheit 2 und die Trägerplatte 6 separat voneinander ausgebildet und miteinander verbunden sind und in der dritten Ausführungsform die Bildaufnahmeeinheit 2 und die Trägerplatte 6 integriert sind.

Zudem ist in Fig. 8 zu erkennen, dass die Bildaufnahmeeinheit 2 ein optisches Element mit einem Austrittspunkt, an dem eine optische Achse 17 des optischen Elements aus dem optischen Element austritt, aufweist. Dabei haben die erste Achse 9 und die zweite Achse 10 einen Abstand zu dem Austrittspunkt, der maximal 100 Millimeter beträgt, also innerhalb einer theoretischen Kugel 18 liegt, deren Mittelpunkt der Austrittspunkt ist und die einen Radius von 100 Millimeter hat.

Das Sichtsystem 1 (bzw. die Bildaufnahmeeinheit-Halterung 5) weist eine erste Justagekomponente 19 zum mechanischen Einstellen des ersten Winkels 11 auf (vgl. Fig. 7). Die erste Justagekomponente 19 kann stufenlos verstellbar sein. Die erste Justagekomponente 19 kann selbsthemmend ausgebildet sein.

In Fig. 7 wird die erste Justagekomponente 19 durch eine mit der Trägerplatte 6 fest verbundene oder insbesondere in der Trägerplatte 6 ausgebildete Geometrie 20 sowie eine drehbar, aber axialfest (bzgl. ihrer Längsachse) in der Tragstruktur 8 gelagerte Gegengeometrie 20a, vorzugsweise in Form einer Schraubenverzahnung/Schrägverzahnung, gebildet. Die Gegengeometrie 20a kann etwa in Form einer Schraube, insbesondere einer furchenden Schraube, eines zahnradförmigen Körpers, einer Spindel oder eines schneckenförmigen Körpers ausgebildet sein. Die Gegengeometrie 20a ist in Fig. 7 in Form einer Schraube ausgebildet. Dabei stehen die Geometrie 20 und die Gegengeometrie 20a miteinander in Verzahnungseingriff, wobei eine Drehung der Gegengeometrie 20a in der Tragstruktur 8 eine Drehung der Geometrie 20 um die erste Achse 9 hervorruft. Insbesondere wirken die Geometrie 20 und die Gegengeometrie 20a nach Art eines Schneckengetriebes zusammen.

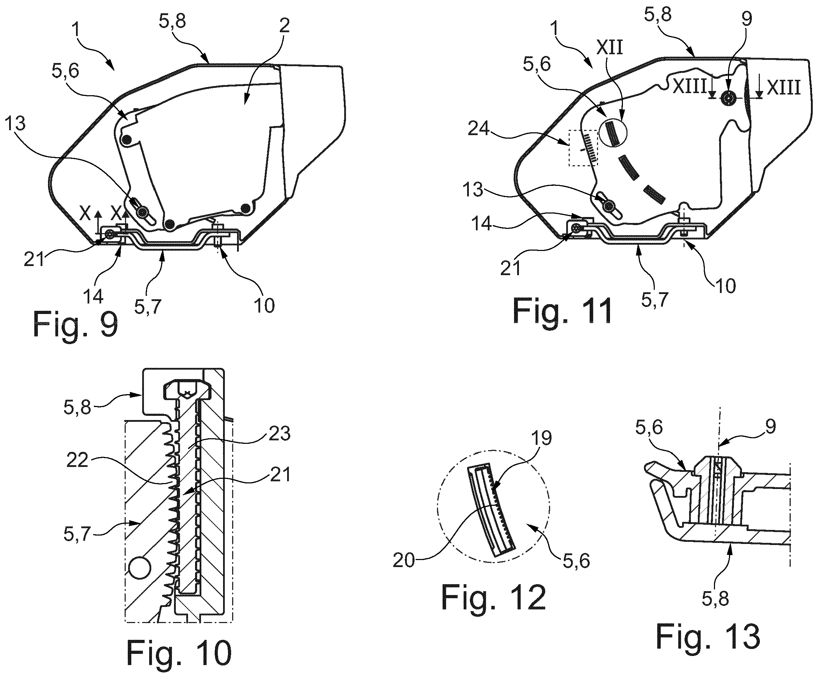

Fign. 9 bis 13 zeigen eine vierte Ausführungsform des indirekten Sichtsystems 1 für das Kraftfahrzeug. Das Sichtsystem 1 gemäß der vierten Ausführungsform entspricht im Wesentlichen dem Sichtsystem 1 gemäß der ersten Ausführungsform und weist die Bildaufnahmeeinheit 2 und die Bildaufnahmeeinheit-Halterung 5 auf, wobei die Bildaufnahmeeinheit-Halterung 5 wiederum die Trägerplatte 6, den Halter 7 sowie die Tragstruktur 8 aufweist. Dabei ist die Bildaufnahmeeinheit-Halterung 5 so ausgebildet, dass die Trägerplatte 6 und die Tragstruktur 8 zueinander um die erste Achse 9 drehbar verbunden sind und die Tragstruktur 8 und der Halter 7 zueinander um die zweite Achse 10 drehbar verbunden sind, so dass der erste Winkel 11 zwischen der Trägerplatte 6 und der Tragstruktur 8 um die erste Achse 9 und der zweite Winkel 12 zwischen der Tragstruktur 8 und dem Halter 7 um die zweite Achse 10 mechanisch (durch relative Drehung der beiden Bauteile 6, 8 bzw. der beiden Bauteile 7, 8 um die jeweilige Achse 9, 10) einstellbar ist.

Fign. 9 und 11 zeigen das Sichtsystem 1 in einer Schnittdarstellung in einer Ebene, die die zweite Achse 10 enthält. Fig. 10 zeigt ein vergrößertes Detail des Sichtsystems 1 in einer Schnittdarstellung in einer Ebene, die entlang der Linie X aus Fig. 9 geschnitten ist. Fig. 12 zeigt ein vergrößertes Detail XII des Sichtsystems 1 aus Fig. 11. Fig. 13 zeigt ein vergrößertes Detail des Sichtsystems 1 in einer Schnittdarstellung in einer Ebene, die entlang der Linie XIII aus Fig. 11 geschnitten ist.

Wie das Sichtsystem 1 gemäß der zweiten Ausführungsform weist das Sichtsystem 1 gemäß der vierten Ausführungsform das erste Fixierelement 13 und das zweite Fixierelement 14 auf. Das erste Fixierelement 13 ist in Form einer Schraube ausgebildet, die das in der Trägerplatte 6 ausgebildete erste Langloch 15 durchgreift, um in das in der Tragstruktur 8 ausgebildete Innengewinde einzugreifen und dadurch die Trägerplatte 6 und die Tragstruktur 8 kraftschlüssig miteinander zu verbinden bzw. innerhalb des begrenzten Winkelbereichs verstellen zu können. Das zweite Fixierelement 14 ist in Form einer Schraube ausgebildet, die das in dem Halter 7 ausgebildete zweite Langloch 16 durchgreift, um in das in der Tragstruktur 8 ausgebildete Innengewinde einzugreifen und dadurch den Halter 7 und die Tragstruktur 8 kraftschlüssig miteinander zu verbinden bzw. innerhalb des begrenzten Winkelbereichs verstellen zu können.

In Fig. 12 wird die erste Justagekomponente 19 durch die mit der Tragstruktur 8 fest verbundene oder insbesondere in der Tragstruktur 8 ausgebildete Geometrie 20 sowie die mit der Trägerplatte 6 fest verbundene oder insbesondere in der Trägerplatte 6 ausgebildete (nicht explizit dargestellte) Gegengeometrie gebildet. Die Geometrie 20 und die Gegengeometrie bilden eine Rastverbindung/Schnappverbindung aus, bei der die Geometrie 20 und/oder die Gegengeometrie elastisch verformbar sind, um die Geometrie 20 und die Gegengeometrie zueinander zu verdrehen. Das heißt, dass die Geometrie 20 und die Gegengeometrie miteinander in elastisch lösbarem Verzahnungseingriff stehen, so dass sie in definierten Schritten zueinander verdreht werden können.

Das Sichtsystem 1 (bzw. die Bildaufnahmeeinheit-Halterung 5) weist eine zweite Justagekomponente 21 zum mechanischen Einstellen des zweiten Winkels 12 auf (vgl. Fign. 9 und 10). Die zweite Justagekomponente 21 kann stufenlos verstellbar sein. Die zweite Justagekomponente 21 kann selbsthemmend ausgebildet sein. Die zweite Justagekomponente 21 wird durch eine mit dem Halter 7 fest verbundene oder insbesondere in dem Halter 7 ausgebildete Geometrie 22, vorzugsweise in Form einer Schrägverzahnung, sowie eine drehbar, aber axialfest (bzgl. ihrer Längsachse) in der Tragstruktur 8 gelagerte Gegengeometrie 23, vorzugsweise in Form einer Schraubenverzahnung/eines schrägverzahnten Zahnrads, gebildet. Die Gegengeometrie 23 ist etwa in Form einer Schraube, insbesondere einer furchenden Schraube, eines zahnradförmigen Körpers, einer Spindel oder eines schneckenförmigen Körpers ausgebildet. Dabei stehen die Geometrie 22 und die Gegengeometrie 23 miteinander in Verzahnungseingriff, wobei eine Drehung der Gegengeometrie 23 in der Tragstruktur 8 eine Drehung der Geometrie 22 um die zweite Achse 10 hervorruft. Insbesondere wirken die Geometrie 22 und die Gegengeometrie 23 nach Art eines Schneckengetriebes zusammen.

Zudem ist in Fig. 11 zu erkennen, dass das Sichtsystem 1 eine erste Anzeigeskala 24 aufweist, auf der eine Position des ersten Winkels 11, d.h. der Relativverdrehung zwischen der Tragstruktur 8 und der Trägerplatte 6 um die erste Achse 9 angezeigt ist. Zudem kann das Sichtsystem 1 eine (nicht dargestellte) zweite Anzeigeskala aufweisen, auf der eine Position des zweiten Winkels 12, d.h. der Relativverdrehung zwischen der Tragstruktur 8 und dem Halter 7 um die zweite Achse 10 angezeigt ist.

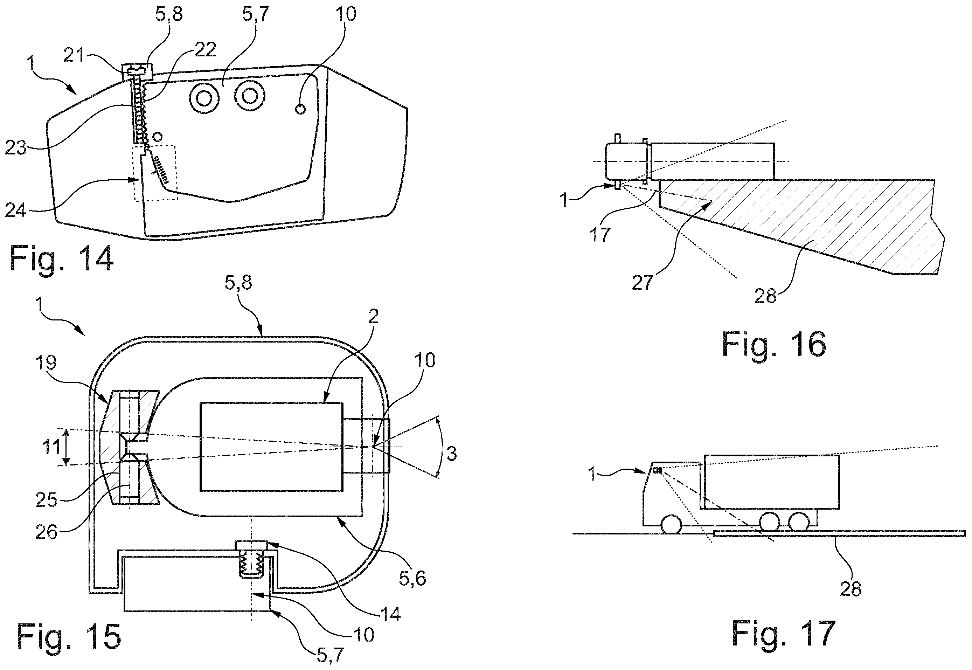

Fig. 14 zeigt eine fünfte Ausführungsform des indirekten Sichtsystems 1 für das Kraftfahrzeug. Das Sichtsystem 1 gemäß der fünften Ausführungsform entspricht im Wesentlichen dem Sichtsystem 1 gemäß der vierten Ausführungsform.

In Fig. 14 wird die zweite Justagekomponente 21 durch die mit dem Halter 7 fest verbundene oder insbesondere in dem Halter 7 ausgebildete Geometrie 22 sowie die drehbar, aber axialfest (bzgl. ihrer Längsachse) in der Tragstruktur 8 gelagerte Gegengeometrie 23, vorzugsweise in Form einer Schraubenverzahnung/Schrägverzahnung, gebildet. Die Gegengeometrie 23 kann etwa in Form einer Schraube, insbesondere einer furchenden Schraube, eines zahnradförmigen Körpers, einer Spindel oder eines schneckenförmigen Körpers ausgebildet sein. Die Gegengeometrie 23 ist in Fig. 14 in Form einer Schraube ausgebildet. Dabei stehen die Geometrie 22 und die Gegengeometrie 23 miteinander in Verzahnungseingriff, wobei eine Drehung der Gegengeometrie 23 in der Tragstruktur 8 eine Drehung der Geometrie 22 um die zweite Achse 10 hervorruft. Insbesondere wirken die Geometrie 22 und die Gegengeometrie 23 nach Art eines Schneckengetriebes zusammen.

Fig. 15 zeigt eine sechste Ausführungsform des indirekten Sichtsystems 1 für das Kraftfahrzeug. Das Sichtsystem 1 gemäß der sechste Ausführungsform entspricht im Wesentlichen dem Sichtsystem 1 gemäß der vierten Ausführungsform.

In Fig. 15 wird die erste Justagekomponente 19 durch ein in der Tragstruktur 8 ausgebildetes Innengewinde 25 und ein Bauteil 26 gebildet, das ein in das Innengewinde 25 eingreifendes Außengewinde aufweist und etwa in Form einer Schraube oder eines Gewindebolzens ausgebildet ist. In der dargestellten Ausführungsform ist das Bauteil 26 in Form zweier Madenschrauben ausgebildet. Bei Drehung des Bauteils 26 um seine Längsachse relativ zu dem Innengewinde 25, verändert sich eine translatorische Position des Bauteils 26 relativ zu dem Innengewinde 25. Das heißt, dass das Bauteil 26 in das Innengewinde 25 hineinschraubbar ist. Die Einschraubrichtung des Bauteils 26 ist quer zu der ersten Achse 9 und das Bauteil 26 ist in Anlage mit der Trägerplatte 6, so dass je nach Position des Bauteils 26 die Trägerplatte 6 relativ zu der Tragstruktur 8 um die erste Achse 10 gedreht wird. Das heißt, dass die erste Justagekomponente 19, etwa nach Art eines Hebels, zwischen der Trägerplatte 6 und der Tragstruktur 8 wirkt.

In Fign. 16 und 17 ist zu erkennen, dass die optische Achse 17 einen Schnittpunkt 27 mit einem gesetzlichen Sichtfeld 28 auf einer Sichtfeldebene hat. Dabei ist die Sichtfeldebene eine definierte Ebene, auf der sich eine Sichtfeldgeometrie befindet. Vorzugsweise ist das gesetzliche Sichtfeld ein Sichtfeld nach UN/ECE-R46, insbesondere der Gruppe II oder IV, oder ein Sichtfeld nach der ISO 5721-2.

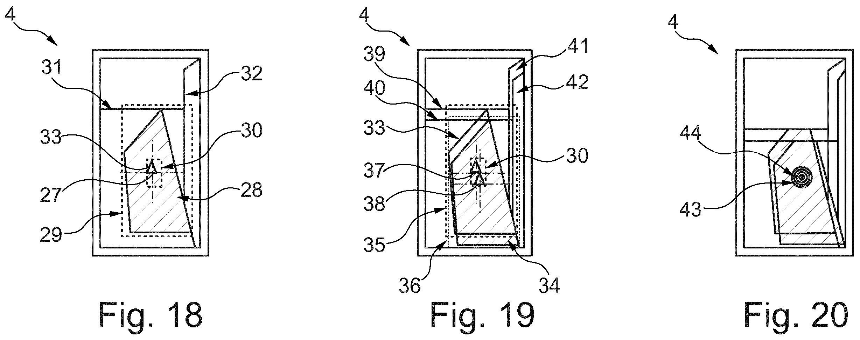

In Fign. 18 bis 20 ist die mit der Bildaufnahmeeinheit 2 verbundene Wiedergabeeinheit 4 dargestellt, auf der das eingesehene Sichtfeld darstellbar ist. In Fig. 17 ist eine Monitor Defined Size 29 nach UN/ECE-R46 dargestellt. Die Monitor Defined Size 29 enthält das gesetzliche Sichtfeld 28. Zudem ist 20% der Monitor Defined Size 30 eingezeichnet, innerhalb der der Schnittpunkt 27 liegt. Als Referenz ist ein Horizont 31 sowie ein Teil eines Fahrzeugs 32 dargestellt. In Fig. 19 ist zu erkennen, dass das eingesehene Sichtfeld justiert wird. Dazu wird der erste Winkel 11 und der zweite Winkel 12 derart justiert, dass ein Ist-Sichtfeld 33 einem Soll-Sichtfeld 34 entspricht, eine Ist-Monitor-Defined-Size 35 einer Soll-Monitor-Defined-Size 36 entspricht, ein Ist-Schnittpunkt 37 einem Soll-Schnittpunkt 38 entspricht, ein Ist-Horizont 39 einem Soll-Horizont 40 entspricht und ein Ist-Fahrzeug 41 einem Soll-Fahrzeug 42 entspricht. Wie in Fig. 20 dargestellt ist, kann ein Soll-Bereich über eine konzentrische Skala 43, d.h. mehrere konzentrische Kreise, und einen Zielpunkt 44 angezeigt werden.

### Bezugszeichenliste

- 1: Sichtsystem
- 2: Bildaufnahmeeinheit
- 3: Sichtfeld
- 4: Wiedergabeinheit
- 5: Bildaufnahmeeinheit-Halterung
- 6: Trägerplatte
- 7: Halter
- 8: Tragstruktur
- 9: erste Achse
- 10: zweite Achse
- 11: erster Winkel
- 12: zweiter Winkel
- 13: erstes Fixierelement
- 14: zweites Fixierelement
- 15: erstes Langloch
- 16: zweites Langloch
- 17: optische Achse
- 18: theoretische Kugel
- 19: erste Justagekomponente
- 20: Geometrie
- 20a: Gegengeometrie
- 21: zweite Justagekomponente
- 22: Geometrie
- 23: Gegengeometrie
- 24: erste Anzeigeskala
- 25: Innengewinde
- 26: Bauteil
- 27: Schnittpunkt
- 28: gesetzliches Sichtfeld
- 29: Monitor Defined Size
- 30: 20% der Monitor Defined Size
- 31: Horizont
- 32: Fahrzeug
- 33: Ist-Sichtfeld
- 34: Soll-Sichtfeld
- 35: Ist-Monitor-Defined-Size
- 36: Soll-Monitor-Defined-Size
- 37: Ist-Schnittpunkt
- 38: Soll-Schnittpunkt
- 39: Ist-Horizont
- 40: Soll-Horizont
- 41: Ist-Fahrzeug
- 42: Soll-Fahrzeug
- 43: Konzentrische Skala
- 44: Zielpunkt

## Patentansprüche

1. Indirektes Sichtsystem (1) für ein Kraftfahrzeug, mit einer Bildaufnahmeeinheit (2), mit der ein Sichtbereich (3) um das Kraftfahrzeug einsehbar ist und die mit einer Wiedergabeeinheit (4) verbindbar ist, um das eingesehene Sichtfeld (3) auf der Wiedergabeeinheit (4) darzustellen, und einer Bildaufnahmeeinheit-Halterung (5) zum Anbringen der Bildaufnahmeeinheit (2) an dem Kraftfahrzeug, wobei die Bildaufnahmeeinheit-Halterung (5) eine mit der Bildaufnahmeeinheit (2) fest verbundene Trägerplatte (6), einen direkt oder indirekt mit dem Kraftfahrzeug fest verbindbaren Halter (7) sowie eine die Trägerplatte (6) und den Halter (7) verbindende Tragstruktur (8) aufweist, wobei die Trägerplatte (6) und die Tragstruktur (8) zueinander um eine erste Achse (9) drehbar verbunden sind und die Tragstruktur (8) und der Halter (7) zueinander um eine zweite Achse (10) drehbar verbunden sind, so dass ein erster Winkel (11) zwischen der Trägerplatte (6) und der Tragstruktur (8) um die erste Achse (9) und ein zweiter Winkel (12) zwischen der Tragstruktur (8) und dem Halter (7) um die zweite Achse (10) mechanisch einstellbar ist, wobei die Bildaufnahmeeinheit-Halterung (5) so ausgebildet ist, dass eine mechanische Einstellung des ersten Winkels (11) unabhängig von einer mechanischen Einstellung des zweiten Winkels (12) ist, wobei das Sichtsystem (1) so ausgebildet ist, dass die Bildaufnahmeeinheit einen IST-Sichtbereich aufnimmt und der IST-Sichtbereich mittels der mechanischen Einstellung des ersten Winkels (11) und/oder des zweiten Winkels (12) auf einen SOLL-Sichtbereich justierbar ist **dadurch gekennzeichnet, dass** das Sichtsystem (1) eine mit der Bildaufnahmeeinheit (2) verbundene Wiedergabeeinheit (4) aufweist, auf der das eingesehene Sichtfeld darstellbar ist, wobei das Sichtsystem derart ausgebildet ist, dass der SOLL-Sichtbereich über einen Soll-Punkt oder einen Soll-Bereich als Einblendung auf der Wiedergabeeinheit (4) oder über ein auf der Wiedergabeeinheit (4) positioniertes, zumindest teilweise lichtdurchlässiges Element eingeblendet wird und der IST-Sichtbereich mittels der mechanischen Einstellung des ersten Winkels (11) und/oder des zweiten Winkels (12) auf den SOLL-Sichtbereich justiert wird.

2. Sichtsystem (1) nach Anspruch 1, **dadurch gekennzeichnet, dass** die Bildaufnahmeeinheit-Halterung (5) so ausgebildet ist, dass eine Drehung zwischen der Trägerplatte (6) und der Tragstruktur (8) um die erste Achse (9) um einen ersten Drehpunkt erfolgt und dass eine Drehung zwischen der Tragstruktur (8) und dem Halter (7) um die zweite Achse (10) um einen zweiten Drehpunkt erfolgt, wobei der erste Drehpunkt zu dem zweiten Drehpunkt unterschiedlich ist.

3. Sichtsystem (1) nach Anspruch 1 oder 2, **dadurch gekennzeichnet, dass** die Bildaufnahmeeinheit-Halterung (5) so ausgebildet ist, dass die erste Achse (9) und die zweite Achse (10) einen Winkel von 45° bis 135° einschließen.

4. Sichtsystem (1) nach einem der Ansprüche 1 bis 3, **dadurch gekennzeichnet, dass** die Bildaufnahmeeinheit (2) ein optisches Element mit einem Austrittspunkt, an dem eine optische Achse (17) des optischen Elements aus dem optischen Element austritt, aufweist, wobei die erste Achse (9) und/oder die zweite Achse (10) einen Abstand zu dem Austrittspunkt hat/haben, der maximal 100 Millimeter beträgt.

5. Sichtsystem (1) nach einem der Ansprüche 1 bis 4, **dadurch gekennzeichnet, dass** die Bildaufnahmeeinheit-Halterung eine erste Justagekomponente (19) zur mechanischen Einstellung des ersten Winkels (11) aufweist, wobei die erste Justagekomponente (19) zur Winkeleinstellung quer zu der ersten Achse translatorisch verschiebbar oder rotatorisch um die erste Achse antreibbar ist, und/oder dass die Bildaufnahmeeinheit-Halterung (5) eine zweite Justagekomponente (21) zur mechanischen Einstellung des zweiten Winkels (12) aufweist, wobei die zweite Justagekomponente (21) zur Winkeleinstellung quer zu der zweiten Achse translatorisch verschiebbar oder rotatorisch um die zweite Achse antreibbar ist.

6. Sichtsystem (1) nach Anspruch 5, **dadurch gekennzeichnet, dass** die erste Justagekomponente (19) und/oder die zweite Justagekomponente (21) durch eine Geometrie (20, 22, 25), die an einem der beiden drehbar verbundenen Bauteile (6, 7, 8) ausgebildet oder damit gekoppelt ist, und eine Gegengeometrie (20a, 23, 26), die an einem anderen der beiden drehbar verbundenen Bauteile (6, 7, 8) ausgebildet oder damit gekoppelt ist, gebildet wird, wobei die Geometrie (20, 22, 25), und die Gegengeometrie (20a, 23, 26) miteinander in Verzahnungseingriff stehen und/oder kraftschlüssig zusammenwirken, und eine relative Drehung zwischen der Geometrie (20, 22, 25) und der Gegengeometrie (20a, 23, 26) die translatorische Verschiebung oder den rotatorischen Antrieb hervorruft.

7. Sichtsystem (1) nach Anspruch 5 oder 6, **dadurch gekennzeichnet, dass** die erste Justagekomponente (19) und/oder die zweite Justagekomponente (21) so ausgebildet sind/ist, dass die mechanische Einstellung des ersten Winkels (11) und/oder des zweiten Winkels (12) stufenlos erfolgt, und/oder dass sie eine Vielzahl von Rastpositionen, in der die jeweilige Winkelposition verriegelt ist, aufweisen/aufweist und/oder die mechanische Einstellung des ersten Winkels (11) und/oder des zweiten Winkels (12) selbsthemmend ausgebildet ist.

8. Sichtsystem (1) nach einem der Ansprüche 1 bis 7, **dadurch gekennzeichnet, dass** eine Position des ersten Winkels (11) über ein erstes Fixierelement (13) der Bildaufnahmeeinheit-Halterung (5) oder über Selbsthemmung fixierbar ist und/oder eine Position des zweiten Winkels (12) über ein zweites Fixierelement (14) der Bildaufnahmeeinheit-Halterung (5) oder über Selbsthemmung fixierbar ist.

## Claims

1. An indirect viewing system (1) for a motor vehicle, comprising an image recording unit (2) with which a viewing region (3) around the motor vehicle can be viewed and which can be connected to a display unit (4) in order to display the viewed field of view (3) on the display unit (4), and an image recording unit holder (5) for attaching the image recording unit (2) to the motor vehicle, wherein the image recording unit holder (5) comprises a carrier plate (6) fixedly connected to the image recording unit (2), a holder (7) which can be directly or indirectly fixedly connected to the motor vehicle, and a support structure (8) connecting the carrier plate (6) and the holder (7), wherein the carrier plate (6) and the support structure (8) are connected to each other so as to be rotatable about a first axis (9), and the support structure (8) and the holder (7) are connected to each other so as to be rotatable about a second axis (10), such that a first angle (11) between the carrier plate (6) and the support structure (8) about the first axis (9) and a second angle (12) between the support structure (8) and the holder (7) about the second axis (10) can be mechanically adjusted, wherein the image recording unit holder (5) is configured such that a mechanical adjustment of the first angle (11) is independent of a mechanical adjustment of the second angle (12), wherein the viewing system (1) is configured such that the image recording unit records an ACTUAL viewing region and the ACTUAL viewing region can be adjusted to a TARGET viewing region via the mechanical adjustment of the first angle (11) and/or of the second angle (12), **characterized in that** the viewing system (1) comprises a display unit (4) connected to the image recording unit (2) and on which the viewed field of view can be displayed, wherein the viewing system is configured such that the TARGET viewing region is displayed as an overlay on the display unit (4) via a target point or a target region or via an at least partially light-transmissive element positioned on the display unit (4), and the ACTUAL viewing region is adjusted to the TARGET viewing region via the mechanical adjustment of the first angle (11) and/or of the second angle (12).

2. The viewing system (1) according to claim 1, **characterized in that** the image recording unit holder (5) is configured such that a rotation between the carrier plate (6) and the support structure (8) about the first axis (9) takes place about a first pivot point, and such that a rotation between the support structure (8) and the holder (7) about the second axis (10) takes place about a second pivot point, wherein the first pivot point is different from the second pivot point.

3. The viewing system (1) according to claim 1 or 2, **characterized in that** the image recording unit holder (5) is configured such that the first axis (9) and the second axis (10) enclose an angle of 45° to 135°.

4. The viewing system (1) according to one of claims 1 to 3, **characterized in that** the image recording unit (2) comprises an optical element with an exit point at which an optical axis (17) of the optical element exits from the optical element, wherein the first axis (9) and/or the second axis (10) has/have a distance from the exit point that is at most 100 millimeters.

5. The viewing system (1) according to one of claims 1 to 4, **characterized in that** the image recording unit holder comprises a first adjustment component (19) for mechanically adjusting the first angle (11), wherein the first adjustment component (19) can be displaced translationally or can be driven rotationally about the first axis transversely to the first axis for angular adjustment, and/or that the image recording unit holder (5) comprises a second adjustment component (21) for mechanically adjusting the second angle (12), wherein the second adjustment component (21) can be displaced translationally or can be driven rotationally about the second axis transversely to the second axis for angular adjustment.

6. The viewing system (1) according to claim 5, **characterized in that** the first adjustment component (19) and/or the second adjustment component (21) is formed by a geometry (20, 22, 25) which is formed on one of the two rotatably connected components (6, 7, 8) or is coupled thereto, and a counter-geometry (20a, 23, 26) which is formed on another one of the two rotatably connected components (6, 7, 8) or is coupled thereto, wherein the geometry (20, 22, 25) and the counter-geometry (20a, 23, 26) are in toothed engagement with each other and/or cooperate in a force-fitting manner, and a relative rotation between the geometry (20, 22, 25) and the counter-geometry (20a, 23, 26) causes the translational displacement or the rotational drive.

7. The viewing system (1) according to claim 5 or 6, **characterized in that** the first adjustment component (19) and/or the second adjustment component (21) are/is configured such that the mechanical adjustment of the first angle (11) and/or of the second angle (12) takes place continuously, and/or that they have/has a plurality of latching positions in which the respective angular position is locked, and/or the mechanical adjustment of the first angle (11) and/or of the second angle (12) is configured to be self-locking.

8. The viewing system (1) according to one of claims 1 to 7, **characterized in that** a position of the first angle (11) can be fixed via a first fixing element (13) of the image recording unit holder (5) or via self-locking, and/or a position of the second angle (12) can be fixed via a second fixing element (14) of the image recording unit holder (5) or via self-locking.

## Revendications

1. Système de vision (1) indirect pour un véhicule automobile, avec une unité d'enregistrement d'image (2) avec laquelle une zone de vision (3) autour du véhicule automobile peut être vue et qui peut être reliée à une unité de rendu (4) afin de représenter le champ de vision (3) vu sur l'unité de rendu (4) et un support d'unité d'enregistrement d'image (5) pour le montage de l'unité d'enregistrement d'image (2) au niveau du véhicule automobile, dans lequel le support d'unité d'enregistrement d'image (5) présente une plaque porteuse (6) reliée de manière fixe à l'unité d'enregistrement d'image (2), un support (7) pouvant être relié de manière fixement directement ou indirectement au véhicule automobile ainsi qu'une structure porteuse (8) reliant la plaque porteuse (6) et le support (7), dans lequel la plaque porteuse (6) et la structure porteuse (8) sont reliées l'une à l'autre de manière rotative autour d'un premier axe et la structure porteuse (8) et le support (7) sont reliés l'un à l'autre de manière rotative autour d'un second axe (10), de sorte qu'un premier angle (11) soit réglable mécaniquement entre la plaque porteuse (6) et la structure porteuse (8) autour du premier axe (9) et un second angle (12) entre la structure porteuse (8) et le support (7) autour du second axe (10), dans lequel le support d'unité d'enregistrement d'image (5) est configuré de sorte qu'un réglage mécanique du premier angle (11) soit indépendant d'un réglage mécanique du second angle (12), dans lequel le système de vision (1) est configuré de sorte que l'unité d'enregistrement d'image enregistre une zone de vision RÉELLE que et la zone de vision RÉELLE puisse être ajustée sur une zone de vision DE CONSIGNE au moyen du réglage mécanique du premier angle (11) et/ou du second angle (12) **caractérisé en ce que** le système de vision (1) présente une unité de rendu (4) reliée à l'unité d'enregistrement d'image (2), unité de rendu sur laquelle le champ de vision vu peut être représenté, dans lequel le système de vision est configuré de sorte que la zone de vision DE CONSIGNE soit affichée par le biais d'un point de consigne ou d'une zone de consigne comme affichage sur l'unité de rendu (4) ou par le biais d'un élément au moins partiellement translucide, positionné sur l'unité de rendu (4) et la zone de vision RÉELLE est ajustée sur la zone de vision DE CONSIGNE au moyen du réglage mécanique du premier angle (11) et/ou du second angle (12).

2. Système de vision (1) selon la revendication 1, **caractérisé en ce que** le support d'unité d'enregistrement d'image (5) est configuré de sorte qu'une rotation entre la plaque porteuse (6) et la structure porteuse (8) soit effectuée autour d'un premier axe autour d'un premier point de rotation et **en ce qu'**une rotation entre la structure porteuse (8) et le support (7) soit effectuée autour du second axe (10) autour d'un second point de rotation, dans lequel le premier point de rotation est différent du second point de rotation.

3. Système de vision (1) selon la revendication 1 ou 2, **caractérisé en ce que** le support d'unité d'enregistrement d'image (5) est configuré de sorte que le premier axe (9) et le second axe (10) forment un angle de 45° à 135°.

4. Système de vision (1) selon l'une quelconque des revendications 1 à 3, **caractérisé en ce que** l'unité d'enregistrement d'image (2) présente un élément optique avec un point de sortie au niveau duquel un axe optique (17) de l'élément optique sort de l'élément optique, dans lequel le premier axe (9) et/ou le second axe (10) présente(nt) une distance par rapport au point de sortie qui s'élève au maximum à 100 millimètres.

5. Système de vision (1) selon l'une quelconque des revendications 1 à 4, **caractérisé en ce que** le support d'unité d'enregistrement d'image présente un premier composant d'ajustage (19) pour le réglage mécanique du premier angle (11), dans lequel le premier composant d'ajustage (19) peut être déplacé en translation pour le réglage angulaire transversalement au premier axe ou entraîné en rotation autour du premier axe et/ou **en ce que** le support d'unité d'enregistrement d'image (5) présente un second composant d'ajustage (21) pour le réglage mécanique du second angle (12), dans lequel le second composant d'ajustage (21) peut être déplacé en translation pour le réglage angulaire transversalement au second axe ou entraîné en rotation autour du second axe.

6. Système de vision (1) selon la revendication 5, **caractérisé en ce que** le premier composant d'ajustage (19) et/ou le second composant d'ajustage (21) est formé par une géométrie (20, 22, 25) qui est configurée au niveau de l'un des deux éléments (6, 7, 8) reliés en rotation ou couplée à celui-ci, et une contre-géométrie (20a, 23, 26) qui est configurée au niveau d'un autre des deux éléments (6, 7, 8) reliés de manière rotative ou couplée à celui-ci, dans lequel la géométrie (20, 22, 25), et la contre-géométrie (20a, 23, 26) sont en prise par enclenchement entre elles et/ou coagissent à force, et une rotation relative entre la géométrie (20, 22, 25) et la contre-géométrie (20a, 23, 26) suscite le déplacement en translation ou l'entraînement rotatif.

7. Système de vision (1) selon la revendication 5 ou 6, **caractérisé en ce que** le premier composant d'ajustage (19) et/ou le second composant d'ajustage (21) est/sont réalisés de sorte que le réglage mécanique du premier angle (11) et/ou du second angle (12) soit effectué en continu et/ou qu'il(s) présente(nt) une pluralité de positions d'encliquetage dans laquelle la position angulaire respective est verrouillée et/ou le réglage mécanique du premier angle (11) et/ou du second angle (12) est configuré de manière autobloquante.

8. Système de vision (1) selon l'une quelconque des revendications 1 à 7, **caractérisé en ce qu'**une position du premier angle (11) peut être fixée par le biais d'un premier élément de fixation (13) du support d'unité d'enregistrement d'image (5) ou par autoblocage et/ou une position du second angle (12) peut être fixée par le biais d'un second élément de fixation (14) du support d'unité d'enregistrement d'image (5) ou par autoblocage.
